# EUROPEAN PATENT APPLICATION

(11) **EP 1 033 856 A1**
(43) Date of publication of application: **06.09.2000**
(21) Application number: 99440036.4
(22) Date of filing: 01.03.1999
(51) Int. Cl.: H04M 1/65

(54) **Digital call-answering and message-recording system**

(71) Applicant: ALCATEL, 75008 Paris (FR)
(72) Inventor: Moisset, Eric, 67230 Benfeld (FR)
(74) Representative: Rausch, Gabriele, Dr.

(57) **Abstract**

A digital call-answering and message-recording system is characterized by comprising an analysis circuit inquiring an incoming caller and a recording circuit recording a message with a quality which depends on a response to the inquiry of the incoming caller by the analysis circuit. The system allows user-controlled and/or automatic recording of a message having a recording quality which is adjustable and selectable. In particular, for applications involving cord-less telephone systems in combination with GSM input calls improved recording quality is achieved due to the avoidance of a plurality of compression and data processing stages.

## Description

The invention concerns an improved digital call-answering and message-recording system having adjustable recording quality.

Message-recording and call-answering systems are commonly used in business and household applications. A typical call-answering system can be switched into operation when the user is either not available to answer the phone or does not wish to answer the phone. The calling party is than greeted with a recorded message and requested to leave a message on the machine. Optional features of such machines allow the user to listen-in on the incoming call prior to deciding whether or not to accept the call or to allow the call to proceed to the recording stage of the machine. Various improvements in these systems have been developed in the art, and interactive systems involving caller input either by keypad instructions or by voice have been developed.

US 5671268 discloses a telephone answering machine having two tape units. A first tape unit records the users outgoing general message issued to all callers and a second tape is provided for recording incoming messages. A control device detects a tone code defined by and entered by a caller in conjunction with recording a caller message. The second tape is rewound to play back the recorded callers message to the user. The user can then reenter the same code to record a response to the specific callers message on the first tape. A control device thereby detects the code being reentered by the caller, the next time he or she calls, and searches for a response recorded by the user which corresponds to the reentered code. The control device then examines the first tape for the reentered code in conjunction with the response recorded by the user. In this manner, selective play back to the caller is facilitated using only the response recorded by the user corresponding to the reentered code.

US patent 4736405 discloses a communication system having speech guidance operation. The user of such a system can be instructed by a speech message to execute an operation according to a procedure to provide various different services. A switching system within the communication complex identifies the type of service which the user wants to use and supplies speech information in a conversational mode to a communication terminal device in order to instruct the user concerning execution of procedure for the service. In this manner, the user can acquire a desired service even if he or she has no previous knowledge of the operation procedure for the service.

WO 98/03004 describes a customer base station system having a radio antenna for communication to mobile stations using a cordless protocol as well as fixed connections to a fixed telephone instrument and an answer machine. The apparatus is connected to a conventional public switched telecommunications network using a fixed exchange line. The system provides two separate directory numbers, a primary number and an alternative number, for incoming calls. The mobile units may also communicate with a cellular radio system using a cellular protocol such as GSM (Global System for Mobile Telecommunications) via a base transceiver site (BTS) and a mobile switching center (MSC) connected to the fixed switching system. A service point is also connected to the mobile switching center. Incoming calls can be made to users of the equipment by callers connected to the switched telecommunications system (or even the mobile system) in a conventional manner.

These systems of prior art provide for instructions and selected recording and play back of messages using an automatic recording message system. In most cases the quality of the recorded messages is sufficient for the message to be intelligible. However, none of these systems are capable of addressing recording quality problems associated with particular types of calls to provide improved recording quality in a selective fashion. As a result thereof, the quality of certain recorded calls is so poor that the message can be barely understood.

In view of this outstanding problem of prior art, it is the purpose of the invention to provide a digital call-answering and message-recording system which is capable of recording massages in improved quality should such a recording be desired and/or necessary.

This purpose of the invention is achieved in a digital call-answering and message-recording system in that the system comprises an analysis circuit inquiring an incoming caller and a recording circuit to record a message with a quality in dependence on results of the inquiry of the incoming caller by the analysis circuit.

In accordance with the invention, allowance is made within the capabilities of the system for intelligent recordings having high, low, or intermediate quality. For example, should the particular connection associated with a particular call be subjected to background noise of a sufficient magnitude as to impair the intelligibility of the communication the quality of the recording may not be satisfactory unless additional measures are taken. Recording problems are often associated, for example, with cellular telephones in which interference involving switch-over effects from a moving callr, radio frequency interference phenomena as well as digital compression filtering, and multiplexing processes often result in poor recording quality. Foreign callers are often required to record a message in a language which is not their native language. Such messages recorded with improper or imperfect diction or pronunciation can be extremely difficult to understand even if the quality of the recording is excellent. In accordance with the invention, recognition of the need for improved recording quality is either automatically carried out by the analysis circuit or is in response to instructions by the caller. In this manner, an option is provided for improved recording fidelity.

In an improvement of the invention, the analysis and recording circuits are incorporated within a DECT base station and/or a digital answering machine connected to the DECT base station. This advantageous embodiment provides for enhanced recording capability within the context of a cordless telephone system. Such cordless systems incorporate a plurality of data filtering and compression algorithms which can lead to degradation in the recording quality. Selective avoidance of these algorithms can therefore improve this recording quality.

An additional embodiment of the invention provides that the recording circuit records the message from the incoming caller in ADPCM quality. In this fashion, additional data processing steps prior to recording of the message are avoided to keep the incoming data corresponding to the caller message in optimum digital quality.

A preferred improvement of the invention provides that the analysis circuit examines a calling line identifier of the incoming caller. In this manner, should the incoming calling line identifier be associated with a caller who is likely to require improved recording quality, this is recognized using the calling line identifier and the incoming caller routed to optional recording at high quality.

In a preferred embodiment, the analysis circuit issues a recorded message to the incoming caller requesting input from the incoming caller. In this fashion, the incoming caller can determine whether or not his message is to be recorded in high quality. The decision is not left to the analysis circuit itself, rather the analysis circuit is aided in its decision by the wishes of the incoming caller.

In an improvement of this embodiment, the analysis circuit requests voice input from the incoming caller. This embodiment has the advantage of the user frendliness of voice-guided systems which are easy for the incoming caller to activate even without previous knowledge of the function of the system.

In an alternative embodiment or in addition thereto, the analysis circuit requests keypad input from the incoming caller. This keypad input from the incoming caller can be used to trigger high or low quality recording, to instruct the analysis circuit to issue further requests, or to open additional options to the incoming caller. Furthermore, the processing of a response to the keypad input is unique and does not require any voice analysis on the part of the analysis circuit.

In accordance with a preferred embodiment, the analysis unit investigates whether or not the incoming caller is a GSM handset. This embodiment has the advantage of providing for enhanced recording in the event that a GSM handset caller accesses the system. Such cellular telephone connections can often be of rather poor quality such that recording thereof in optimum recording quality is desirable.

Further features of the invention can be extracted from the subsequent description of a preferred embodiment in connection with the drawings. These features can be utilized in accordance with the invention either individually or collectively in arbitrary combination. The embodiment described below is not to be considered as an exhaustive enumeration of inventive configurations, rather has exemplary character only for illustration of the invention.
- Fig. 1: shows a schematic layout of the digital call-answering and message-recording system in accordance with the invention in a DECT environment as accessed by a GSM hand set, and
- Fig. 2: shows a flow chart approach to several options which can be exercised by the digital call-answering and message-recording system in accordance with the invention in response to an incoming call by a GSM user.

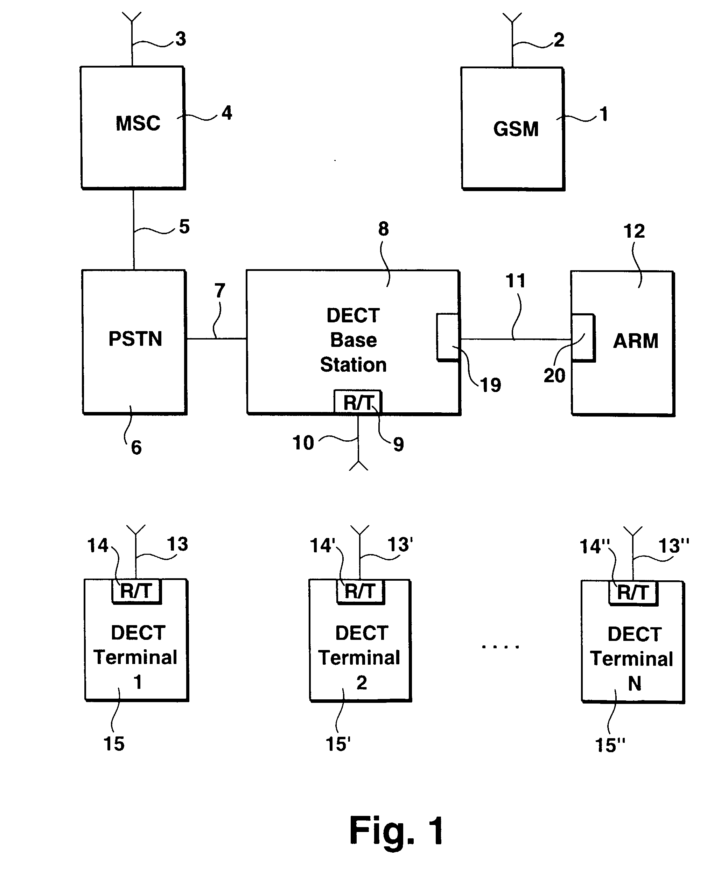

Fig. 1 illustrates a particular embodiment of the invention in which a GSM handset 1 transmits a message to an MSC 4 (mobile switching center) via antennae 2 and 3, respectively. The MSC transmits the message along a connection cable 5 to a PSTN station 6. The PSTN 6 passes the incoming call along cable 7 to a DECT base station 8. The DECT base station 8 has a receiver transmitter (R/T) 9 coupled to an antenna 10 for contacting a plurality of DECT terminals 15, 15', 15''. Each DECT terminal has a receiver and transmitter 14, 14', 14'' coupled to an antenna 13, 13', 13'' for communication with the base station 8. An analysis circuit 19 is resident in the DECT base station 8 to act as an intelligent interface between the base station 8 and an automatic digital recording machine 12 (ARM) connected to the base station 8 via cable 11. Other embodiments are possible in which the connection between the ARM 12 and the DECT base station 8 is cordless. The ARM 12 has a recording circuit 20 acting in response to instructions from the analysis circuit 19 to record a message in a desired quality.

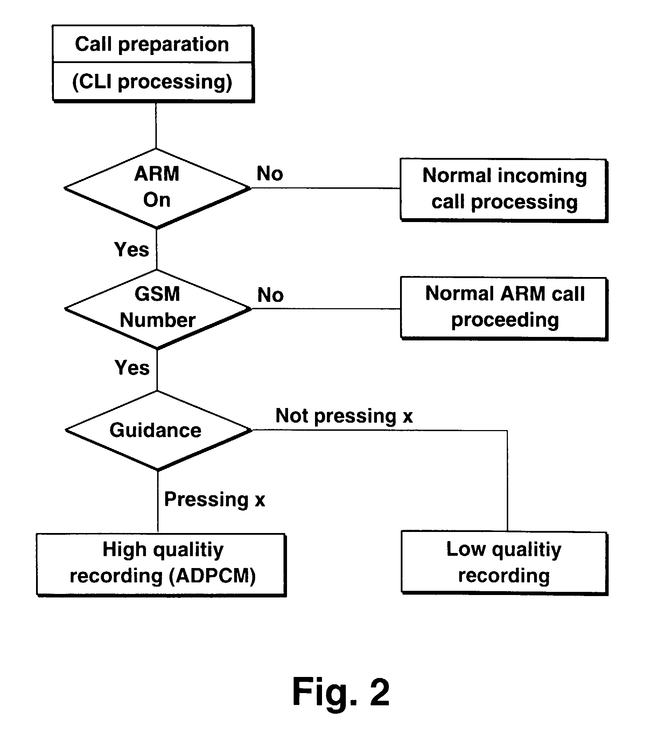

A schematic block-functional diagram of the system is shown in Fig. 2. In response to an incoming call, a call preparation phase (CLI processing) investigates the incoming call. In the event that the ARM is switched on, the calling-line identifier (CLI) is analysed to determine whether or not the call originates from a GSM number. Should the answering machine be switched-off, normal incoming call processing is carried out. Should the incoming call CLI correspond to a GSM number, a voice-guidance message is issued to the caller requesting that the caller press a key of his keypad to record an incoming message in high quality. Such a message could, for example, be: "If you are calling from a GSM, please press X to record your message in high quality". Other comparable messages or a plurality of differing messages can also be issued. In the event that the incoming call does not originate from a GSM number, or in the event that no information with regard to processing of a CLI is available, a normal ARM call procedure is followed. Should the incoming GSM caller choose the high quality recording by entering, for example, a stroke on his keypad in response to the request of the voice, a high quality recording (e.g. ADPCM quality) is effected.

Clearly, the base station 8 the terminals 15, 15', 15'' and the ARM 12 also contain conventional electronic components such as displays, memories, processors, keypads, and the like. In particular, the analysis 19 and recording circuits 20 can be partly or fully created by programmed digital units of these kinds.

Referring to Figs. 1 and 2, the system functions as follows. A GSM caller 1 dials a telephone number corresponding to the DECT base station 8. In response to reception of the incoming radio signals corresponding to the incoming GSM call 1, the MSC station 4 transfers the call to the PSTN 6. The call is then passed to the DECT base station 8 by cable connection 7. Once in the DECT base station 8, the incoming GSM call 1 is analysed by the analysis circuit 19 which, in the embodiment of Fig. 1, is resident in the DECT base station. Other embodiments of the invention are conceivable in which the analysis circuit is located in the ARM 12 or in which portions of the circuit are located in the DECT base station 8 and portions in the ARM 12. The analysis circuit 19 investigates the CLI of the GSM caller 1 to determine that the incoming call is originating from a GSM 1.

When identifying a GSM caller 1, and in the event that the ARM is switched on, the analysis circuit 19 issues a voice message to the GSM caller 1 to request whether or not the GSM caller 1 would like to record his message in high quality. Should the GSM user 1 request a high quality recording, the analysis circuit 19 passes the incoming call in ADPCM form directly to the recording circuit 20 in the ARM 12. The recording circuit 20 effects recording of the incoming message for the GSM user 1 in ADPCM quality. Alternatively, should the GSM user 1 not request a high quality call from the analysis circuit, the analysis circuit 19 instructs the ARM 12 recording circuit 20 to effect normal recording of the message. The normal quality recording procedure is then carried out by the recording system 20 in the ARM 12.

## Claims

1. Digital call-answering and message-recording system, the system comprising an analysis circuit 19 to inquire an incoming caller 1 and a recording circuit 20 to record a message with a quality in dependence on results of the inquiry of the incoming caller 1 by the analysis circuit 19.

2. The system of claim 1, characterized in that the analysis 19 and recording circuits 20 are incorporated within a DECT base station 8 and/or a digital answering machine 12 connected to the DECT base station 8.

3. The system of claim 1 or 2, characterized in that the recording circuit 20 records the message from the incoming caller in ADPCM quality.

4. The system of any one of the previous claims, characterized in that the analysis unit 19 investigates if the incoming caller is a GSM hand set 1.

5. The system of any one of the claims 1 through 4, characterized in that the analysis circuit 19 examines a calling-line identifier of the incoming caller 1.

6. The system of any one of the previous claims, characterized in that the analysis circuit 19 issues a recorded message to the incoming caller 1 requesting input from the incoming caller 1.

7. The system of claim 6, characterized in that the analysis circuit 19 request voice input from the incoming caller 1.

8. The system of claim 6 or 7, characterized in that the analysis circuit 19 requests keypad input from the incoming caller 1.

9. Digital call-answering and message-recording machine 12 comprising an analysis circuit 19 to inquire an incoming caller 1 and a recording circuit 20 to record a message with a quality in dependence on results of the inquiry of the incoming caller 1 by the analysis circuit 19.

10. The machine of claim 9, characterized in that the machine 12 is connected to a DECT base station 8.

11. The machine of claim 9 or 10, characterized in that the recording circuit 20 records the message from the incoming caller 1 in ADPCM quality.

12. The machine of any one of the claims 9 through 11, characterized in that the analysis circuit 19 investigates if the incoming caller is a GSM handset 1.

13. The machine of any one of the claims 9 through 12, characterized in that the analysis circuit 19 examines a calling-line identifier of the incoming caller 1.

14. The machine of any one of the claims 9 through 13, characterized in that the analysis circuit 19 issues a recorded message to the incoming caller 1 requesting input from the incoming caller 1.

15. The machine of claim 14, characterized in that the analysis circuit 19 request voice input from the incoming caller 1.

16. The machine of claim 14 or 15, characterized in that the analysis circuit 19 requests keypad input from the incoming caller 1.

17. Method for recording a message from an incoming caller in a digital call-answering and message-recording system, the method comprising inquiring an incoming caller 1 and recording a message from the incoming caller 1 with a quality in dependence on results of the inquiry of the incoming caller 1.

18. The method of claim 17, wherein the the digital call-answering and message recording system comprises analysis 19 and recording circuits 20 incorporated within a DECT base station 8 and/or a digital answering machine 12 connected to the DECT base station 8.

19. The method of claim 17 or 18, characterized in that the message from the incoming caller is recorded in ADPCM quality.

20. The method of any one of the claims 17 through 19, characterized by investigating if the incoming caller is a GSM handset 1.

21. The method of any one of the claims 17 through 20, characterized in that a calling-line identifier of the incoming caller is examined.

22. The method of any one of the claims 17 through 21, characterized in that a recorded message is issued to the incoming caller requesting input from the incoming caller.

23. The method of claim 22, characterized in that voice input from the incoming caller is requested.

24. The method of claim 22 or 23, characterized in that the keypad input from the incoming caller is requested.
